## Europäisches Patentamt
## European Patent Office
## Office européen des brevets

(19)

(11) Veröffentlichungsnummer: **0 111 973**
**B1**

(12)

# EUROPÄISCHE PATENTSCHRIFT

(45) Veröffentlichungstag der Patentschrift:
27.09.89

(21) Anmeldenummer: 83201768.5

(22) Anmeldetag: 14.12.83

(51) Int. Cl.⁴: **H 04 Q 7/04,** H 04 B 7/26

(54) Überwachung einer zwischen ortsfester Funkstation und beweglicher Funkstation bestehenden Funkverbindung.

(30) Priorität: 18.12.82 DE 3246907

(43) Veröffentlichungstag der Anmeldung:
27.06.84 Patentblatt 84/26

(45) Bekanntmachung des Hinweises auf die Patenterteilung:
27.09.89 Patentblatt 89/39

(84) Benannte Vertragsstaaten:
AT BE CH DE FR GB IT LI NL SE

(56) Entgegenhaltungen:
BE-A- 874 400
DE-A- 2 333 139
DE-A- 2 659 635
FR-A- 2 147 022
US-A- 4 027 243
US-A- 4 309 771

PATENTS ABSTRACTS OF JAPAN, Band 3, Nr. 60
(E-112), 23. Mai 1979, Seite 7 E 112; & JP - A - 54 37 601
(HITACHI DENSHI K.K.) 20.03.1979

(73) Patentinhaber: **Philips Kommunikations Industrie AG,
Thurn-und-Taxis-Strasse 10, D-8500 Nürnberg 10 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **BE CH FR GB IT LI NL SE AT**

(72) Erfinder: **Scheinert, Stefan, Dipl.-Ing., Goethestrasse 3,
D-8500 Nürnberg (DE)**

(74) Vertreter: **Peuckert, Hermann, Dipl.-Ing. et al, Philips
Patentverwaltung GmbH
Wendenstrasse 35 Postfach 10 51 49,
D-2000 Hamburg 1 (DE)**

## Beschreibung

Die Erfindung betrifft ein Funkübertragungssystem mit wenigstens einer ortsfesten Funkstation und beweglichen Funkstationen.

In der US-A-4 027 243 (STACKHOUSE et al) ist ein nicht öffentliches Funkübertragungssystem beschrieben mit wenigstens einer Basisstation und mehreren von dieser gesteuerten Stationen. Für die Übermittlung von Rufen oder Befehlen an eine der gesteuerten Stationen sendet die Basisstation digitale Signalfolgen, welche Synchronisierinformationen enthalten. Hiermit soll eine schnelle und sichere Synchronisation zwischen der Basisstation und der gesteuerten Station erreicht werden. In den digitalen Signalfolgen werden die Synchronisierinformation, die erste und zweite Adresse, der Steuerbefehl und ein Quittungssignal dreimal wiederholt. In einer in der mobilen Station angeordneten Auswerteschaltung wird insbesondere im Zusammenhang mit der Rahmensynchronisation überprüft, ob die als Synchronisierinformation übertragene Bitfolge mit der in der Mobilstation gespeicherten Bitfolge übereinstimmt. Ist dies der Fall, so produziert ein Sensor ein Signal, welches anzeigt, daß Synchronismus besteht. Der Sensor erzeugt dieses Signal solange, bis ein Fehlerzähler fünfmal nacheinander feststellt, daß das Synchronisiermuster nicht in der empfangenen Bitfolge enthalten ist, worauf der Sensor ein Signal abgibt, das anzeigt, daß kein Synchronismus mehr besteht. Dieses Signal wird solange abgegeben, bis der Synchronismus wieder hergestellt ist und der Sensor ein entsprechendes Signal abgibt. Eine gesteuerte Station kann den Synchronismus auch aus Signalfolgen ableiten, die nicht für sie selbst bestimmt sind, so daß diese Station den Synchronismus herstellen kann, ohne daß eine Kommunikationsverbindung zwischen ihr und der Basisstation besteht.

Gemäß einem intern bekannten Stand der Technik ist das Funkübertragungssystem in mehrere, aufeinander aufbauende Netzebenen gegliedert. Die unterste Ebene wird von sogenannten Funkzonen gebildet. Der Radius solcher Funkzonen liegt in Abhängigkeit von der Höhe der Antennenmasten von ortsfesten Funkstationen BS und bei einer Sendeleistung von maximal 50 Watt zwischen 5 und 15 km. Jede Funkzone wird von einer ortsfesten Funkstation BS versorgt. Diese kann Gespräche über sogenannte Funkvermittlungseinrichtungen vom und zum öffentlichen Fernsprechnetz weiter vermitteln. Mehrere benachbarte Funkzonen können zu einem sogenannten Rufbereich zusammengefaßt werden. Auf der Festseite werden laufend die Aufenthaltsorte aller beweglichen Funkstationen MS erfaßt und in einem sogenannten Adreßbuch gespeichert. Wechselt eine bewegliche Funkstation MS den Rufbereich, so erfolgt eine Änderung im Adreßbuch.

Ein Gesprächswunsch eines Fernsprechteilnehmers eines öffentlichen Fernsprechnetzes zu einer beweglichen Funkstation MS führt zur Ausstrahlung eines Selektivrufs in allen Funkzonen jenes Rufbereichs, in dem die bewegliche Funkstation MS momentan erfaßt ist.

Das Sende- und Empfangsfrequenzband liegt beispielsweise zwischen 860 und 960 MHz. Der Duplexabstand zwischen Sende- und Empfangsfrequenzband kann zu 45 MHz gewählt werden und Sende- und Empfangsfrequenzband können in ein Kanalraster von 25 KHz unterteilt werden. Die Kanäle werden im Duplexbetrieb betrieben.

Jeder Funkzone des Funkübertragungssystems sind je nach Verkehrsaufkommen eine Anzahl von Sprechkanälen TCH und jeweils mindestens ein Organisationskanal CCH zugeordnet. Dabei werden in räumlich benachbarten Funkzonen unterschiedliche Frequenzen (Organisationskanäle) verwendet. Zur Unterscheidung von Organisationskanal CCH und Sprechkanal TCH werden diese durch einen speziellen Code gekennzeichnet. Bei Ausfall bzw. Störung eines Organisationskanals CCH kann jeder Sprechkanal TCH durch Wechsel des Codes die Aufgaben des Organisationskanals CCH übernehmen. Auf eine sonst aus Sicherheitsgründen erforderliche Duplizierung von Organisationskanälen CCH kann dadurch verzichtet werden.

Aus der DE-AS 2 550 266 ist ein Sprechfunksystem bekannt, bei dem eine Überwachung der Funkkanäle durch Auswertung der Empfangsfeldstärke eines Funkempfängers vorgenommen wird. In einer Zentralstation ist eine Auskoppelschaltung und eine Auswerteschaltung vorgesehen. Die Auskoppelschaltung trennt die von verteilten ortsfesten Funkempfängern über eine Verbindungsleitung übermittelte Geberspannung von dem dieser überlagerten demodulierten Funksignal. In der Auswerteschaltung wird derjenige ortsfeste Funkempfänger im Wiedergabe- und/oder Weitervermittlungsteil der Zentralstation zur Weitergabe bzw. Weitervermittlung durchgeschaltet, welcher mit der höchsten HF-Feldstärke beaufschlagt ist. Im Sprechfunksystem ist neben der ortsfesten Zentralstation, zu welcher ein Sender und mindestens zwei an verschiedenen Stellen angeordnete ortsfeste Funkempfänger gehören, mindestens ein mobiles Funksende- und Empfangsgerät vorgesehen. Das Funksignal des mobilen Funksende- und Empfangsgerät kann mindestens von einem der ortsfesten Funkempfänger empfangen werden. In jedem ortsfesten Funkempfänger ist ein Geber zur Erzeugung einer von den Empfangsbedingungen des zugehörigen ortsfesten Funkempfängers abhängigen Geberspannung angeordnet. Jeder Geber erzeugt eine der Empfangsfeldstärke des zugehörigen ortsfesten Funkempfängers proportionale Gleichspannung, die in der oben geschilderten Weise in der ortsfesten Zentralstation mittels der Auskoppelschaltung und der Auswerteschaltung zur Überwachung der Funkkanäle herangezogen wird.

Nachteilig bei einem solchen Funkübertragungssystem (Sprechfunksystem) ist, daß bei der Auswertung der Empfangsfeldstärke keine Unterscheidung zwischen Nutzsignal (z.B. Daten und/oder Sprache) und Störsignal (Gleichkanalstörung, Spiegelfrequenzeffekte, Störsender) möglich ist. Die Empfangsfeldstärke ist ein Summensignal aus Nutz- und Störsignal, wobei das Pegelverhältnis von Nutz- und Störsignal nicht bekannt ist. Mit steigender Zahl der Übertragungskanäle in einem Funkübertragungssystem steigen die Störsignale aufgrund von Intermodulationsprodukten überproportional an. Die Schwellen für die Auslösung (Freischalten) eines Übertragungskanals dürfen einen Mindestwert nicht unterschreiten. Andererseits darf dieser Mindestwert nicht zu groß gewählt werden, da sonst die Auslösung eines Übertragungskanals häufig auftritt.

Der Erfindung liegt die Aufgabe zugrunde, ein System zur Überwachung einer bestehenden Funkverbindung zwischen ortsfester Funkstation und beweglicher Funkstation derart anzugeben, daß keine Auswertung der Empfangsfeldstärke des betreffenden Empfängers erforderlich ist.

Diese Aufgabe wird durch die im Anspruch 1 gekennzeichneten Merkmale gelöst.

Durch das erfindungsgemäße System ist eine Unterscheidung von schlechter Übertragungsqualität aufgrund von Funkschatten oder großer Entfernung zwischen ortsfester Funkstation und beweglicher Funkstation und von schlechter Übertragungsqualität aufgrund eines Ausfalls eines Senders möglich. Weiterhin ist die Freischaltung eines Sprechkanals auch unter ungünstigen Übertragungsbedingungen in kurzer Zeit möglich. Aufgrund der Überwachung der Zahl von Meldungen sind einer Funkstation (ortsfest oder beweglich) die Bedingungen bekannt, wann die Gegen-Funkstation deren Sender ausgeschaltet, bzw. den Übertragungskanal verlassen hat.

Vorteilhafte Ausgestaltungen der Erfindung sind in den Unteransprüchen gekennzeichnet.

Die Erfindung wird im folgenden anhand eines Ausführungsbeispiels näher beschrieben und erläutert.

Zwischen einer beweglichen Funkstation MS und einer ortsfesten Funkstation BS bestehe eine Funkverbindung (bestehender Übertragungskanal, d.h. Sprechkanal TCH oder Organisationskanal CCH). Die bewegliche Funkstation MS und die ortsfeste Funkstation BS zählen gültige Funkmeldungen G und ungültige Funkmeldungen U auf dem Übertragungskanal.

Eine Funkmeldung kann aus einer Rahmensynchronisation, einem Informationsblock und einem Redundanzblock aufgebaut sein. Die Rahmensynchronisation weist beispielsweise eine Blocklänge von 16 bit auf und wird dem Informationsblock vorangestellt. Aufgrund der Rahmensynchronisation kann in der Funkstation (MS, BS) der Beginn einer Funkmeldung erkannt werden. Zur Fehlererkennung und/oder Fehlerkorrektur können der Informationsblock und Redundanzblock miteinander verwürfelt werden. Im Hinblick auf eine einfache Verarbeitung einer Funkmeldung ist die Blocklänge der Rahmensynchronisation, des Informationsblocks und des Redundanzblocks ein ganzzahliges Vielfaches von 8 bit. Der Funkmeldung kann zusätzlich eine Präambel vorangestellt sein. Auf einen Organisationskanal CCH sendet die ortsfeste Funkstation BS eine Präambel mit beispielsweise 16 bit. Auf einen Sprechkanal TCH wird nur zu Beginn dessen Belegung durch ortsfeste Funkstation BS und bewegliche Funkstation MS eine Präambel vorangestellt. Auf einen Sprechkanal TCH können Sprache und Daten (im Oberband mit z.B. 150 bit/s) übertragen werden. Auf einen Organisationskanal CCH werden nur Daten mit beispielsweise 2,4 Kbit/s übertragen. Funkmeldungen können laufend hintereinander oder nur zu bestimmten Zeitpunkten einem veränderbaren Raster übertragen werden.

Eine Funkmeldung wird beispielsweise als gültig erkannt, wenn folgende Bedingungen erfüllt sind:
- Jitter nicht zu groß
  Der Jitter kann während eines bestimmten Zeitabschnittes erkannt werden, indem Pegelübergänge zeitlich detektiert, gemittelt und ausgewertet werden. Der Jitter darf während dieses Zeitabschnittes einen bestimmten Betrag (Phase) nicht überschreiten. Dadurch ist ein Schutz vor Restfehler möglich.
- Rahmensynchronisation erkannt
  Die empfangenen bits werden mit einem für das Funkübertragungssystem spezifischen Bitmuster verglichen. Bei annähernder Übereinstimmung von empfangenen und gespeicherten Bitmuster gilt die Rahmensynchronisation als erkannt.
- Funkmeldung muß dekodierbar sein
  Nachdem die Rahmensynchronisation erkannt wurde, werden die empfangenen bits des Informationsblocks und des Redundanzblocks gespeichert. Mit dem Redundanzblock kann erkannt werden, wieviele Fehler in einer Funkmeldung enthalten sind. Überschreitet die Zahl der Fehler einen bestimmten Wert, so gilt die Funkmeldung als nicht dekodierbar.
- Funkmeldung muß im Raster liegen
  Den Funkstationen (MS, BS) ist der Zeitpunkt einer neuen Funkmeldung bekannt. Die Funkstationen (MS, BS) überprüfen, ob die empfangene Funkmeldung auch der zeitlichen Anforderung (auftreten im Raster) genügt.

Ist mindestens eine dieser Bedingungen nicht erfüllt, so wird diese Funkmeldung als ungültig eingestuft. Den Funkstationen (MS, BS) ist bekannt, daß ständig Funkmeldungen auf dem Übertragungskanal (TCH, CCH) übertragen werden und daß die Funkmeldungen ein zeitliches Raster haben. Eine Funkmeldung wird deshalb auch dann als ungültig eingestuft, wenn die Funkstation (MS, BS) nichts empfängt.

Fall 1:
Zwischen beweglicher Funkstation MS und ortsfester Funkstation BS bestehe eine Funkverbindung auf dem Organisationskanal CCH.

- Hat der Zähler in der beweglichen Funkstation MS den Zählerstand NCCHW (= 16) erreicht, so startet die bewegliche Funkstation MS keinen Suchlauf nach einem Organisationskanal CCH.
- Wenn die bewegliche Funkstation MS bei einem Zählerstand zwischen NCCHW (= 16) und NCCHSC (= 48) eine gültige Funkmeldung G empfängt, so wird der Zähler auf Null zurückgesetzt und die bewegliche Funkstation MS kann wieder einen Suchlauf starten.

– Beim Erreichen des Zählerstandes NCCHSC (= 48) schaltet die bewegliche Funkstation auf einen dem Organisationskanal CCH zugeordneten Ersatzkanal CCHSC und überprüft, ob auf diesem eine Organisationskanalmeldung empfangen wird.

Mit diesem System ist es möglich, eine Unterscheidung zwischen Verbindungsunterbrechung aufgrund kurzzeitigem Funkschatten und Verbindungsunterbrechung aufgrund des Ausfalls eines Organisationskanals CCH vorzunehmen.

Fall 2:

Zwischen beweglicher Funkstation MS und ortsfester Funkstation BS bestehe eine Funkverbindung auf dem Sprechkanal TCH.

– Hat der Zähler in der beweglichen Funkstation MS den Zählerstand NTXOF (= 4) erreicht, so schaltet die bewegliche Funkstation MS deren Sender aus und bleibt weiterhin diesem Sprechkanal TCH zugeordnet.

– Wenn die bewegliche Funkstation bei einem Zählerstand zwischen NTXOF (= 4) und NTCHR (= 25) NG (= 1) gültige Funkmeldungen G empfängt, so schaltet diese ihren Sender wieder ein und setzt den Zähler auf Null zurück.

– Beim Erreichen des Zählerstandes NTCHR (= 25) verläßt die bewegliche Funkstation MS den Sprechkanal TCH.

Mit diesem System ist es möglich, einen Sprechkanal TCH von der Gegenstation (BS) aus innerhalb kurzer Zeit freizuschalten (4 Funkmeldungen), da nach dieser Zeit sichergestellt ist, daß die bewegliche Funkstation MS ihren Sender ausgeschaltet hat. Nach dieser Zeit hat entweder der Zähler in der beweglichen Funkstation MS mindestens den Zählerstand NTXOF (= 4) erreicht oder die bewegliche Funkstation MS hat eine von NTXOF Auslöse-Meldungen empfangen. Damit ist dieser Sprechkanal TCH für andere bewegliche Funkstationen MS benutzbar.

Falls die bewegliche Funkstation MS mindestens NTXOF Funkmeldungen nicht empfangen konnte, ist deren Sender zwar ausgeschaltet, die Funkverbindung wird jedoch erst beim Erreichen des Zählerstandes NTCHR (= 25) endgültig ausgelöst. Werden keine Funkmeldungen infolge von Funkschatten empfangen, so ist die Wahrscheinlichkeit groß, daß die bewegliche Funkstation MS während dieser Zeit den Funkschatten wieder verlassen hat und NG gültige Funkmeldungen G empfängt.

Fall 3:

Zwischen beweglicher Funkstation MS und ortsfester Funkstation BS bestehe eine Funkverbindung auf dem Sprechkanal TCH.

– Hat der Zähler in der ortsfesten Funkstation BS den Zählerstand NBSP (= 4) erreicht, so erhöht diese die Sendeleistung ihres Senders und überträgt zur beweglichen Funkstation MS einen Befehl zur Erhöhung der Sendeleistung deren Sender.

– Beim Erreichen des Zählerstandes NCONV (= 25) sendet die ortsfeste Funkstation BS höchstens NTXOF (= 4) Auslöse-Meldungen zur beweglichen Funkstation MS. Unabhängig von Empfangsqualität der Funkverbindung in der beweglichen Funkstation MS ist der Sprechkanal TCH nach dieser Zeit frei.

**Patentansprüche**

1. Funkübertragungssystem mit ortsfester Funkstation und beweglichen Funkstationen, welche bei bestehender Funkverbindung aufgrund empfangener Rahmensynchronisation ständig selbsttätig Synchronismus herstellen und halten, dadurch gekennzeichnet, daß die ortsfeste Funkstation geeignet ist, auf einem Übertragungskanal in einem veränderbaren Raster von Zeitabständen laufend Funkmeldungen, beispielsweise Datenblöcke mit Signalisierinformation, zu senden, daß zur permanenten Überwachung der Funkverbindung die beweglichen Funkstationen geeignet sind, den Empfang von Funkmeldungen in diesem Raster zu überwachen, daß bei Empfang von gültigen Funkmeldungen die beweglichen Funkstationen geeignet sind, einen Zähler zurückzusetzen und daß beim Empfang von ungültigen Funkmeldungen die beweglichen Funkstationen geeignet sind, den Zählerstand des Zählers zu erhöhen, wobei dieser ein Kriterium für die Qualität der Funkverbindung darstellt.

2. Funkübertragungssystem nach Anspruch 1, dadurch gekennzeichnet, daß die bewegliche Funkstation auf einem Sprechkanal in einem veränderbaren Raster von Zeitabständen laufend Funkmeldungen, beispielsweise Datenblöcke mit Signalisierinformation, sendet, daß die ortsfeste Funkstation zur permanenten Überwachung der Funkverbindung den Empfang von Funkmeldungen in diesem Raster überwacht, daß beim Empfang von gültigen Funkmeldungen die ortsfeste Funkstation einen Zähler zurücksetzt und daß beim Empfang von ungültigen Funkmeldungen die ortsfeste Funkstation den Zählerstand des Zählers erhöht, wobei dieser ein Kriterium für die Qualität der Funkverbindung darstellt.

3. Funkübertragungssystem nach Anspruch 1, dadurch gekennzeichnet, daß bei Verwendung des Übertragungskanals als Organisationskanal und bei einem Zählerstand größer, gleich NCCCHW die bewegliche Funkstation keinen Suchlauf nach einem Organisationskanal startet.

4. Funkübertragungssystem nach Anspruch 3, dadurch gekennzeichnet, daß beim Empfang einer gültigen Funkmeldung in der beweglichen Funkstation und vor Erreichen eines Zählerstandes NCCHSC, die bewegliche Funkstation einen Suchlauf nach einem Organisationskanal starten kann und den Zähler zurücksetzt.

5. Funkübertragungssystem nach Anspruch 3, dadurch gekennzeichnet, daß beim Erreichen des Zählerstandes NCCHSC die bewegliche Funkstation sich auf einem dem Organisationskanal zugeordneten Ersatzkanal schaltet und überprüft, ob auf diesem eine Organisationskanalmeldung empfangen wird.

6. Funkübertragungssystem nach Anspruch 1, dadurch gekennzeichnet, daß bei Verwendung des Übertragungskanals als Sprechkanal und bei einem Zählerstand größer, gleich NTXOF die bewegliche Funkstation deren Sender ausschaltet und weiterhin diesem Sprechkanal zugeordnet bleibt.

7. Funkübertragungssystem nach Anspruch 6, dadurch gekennzeichnet, daß beim Empfang von NG gültigen Funkmeldungen die bewegliche Funkstation deren Sender wieder einschaltet und den Zähler zurücksetzt.

8. Funkübertragungssystem nach Anspruch 6, dadurch gekennzeichnet, daß beim Erreichen eines Zählerstandes NTCHR die bewegliche Funkstation den Sprechkanal verläßt.

9. Funkübertragungssystem nach Anspruch 2, dadurch gekennzeichnet, daß beim Erreichen eines Zählerstandes NBSP des Zählers in der ortsfesten Funkstation, diese die Sendeleistung ihres Senders erhöht und zur beweglichen Funkstation einen Befehl zur Erhöhung der Sendeleistung deren Sender überträgt.

10. Funkübertragungssystem nach Anspruch 2 und 3, dadurch gekennzeichnet, daß beim Erreichen eines Zählerstandes NCONV des Zählers in der ortsfesten Funkstation diese höchstens NTXOF Auslöse-Meldungen zur beweglichen Funkstation sendet, wobei unabhängig von der Empfangsqualität der Funkverbindung der Sprechkanal nach dieser Zeit frei ist.

11. Funkübertragungssystem nach Anspruch 2 und 3, dadurch gekennzeichnet, daß die ortsfeste Funkstation höchstens NTXOF Auslöse-Meldungen zur beweglichen Funkstation überträgt, wobei unabhängig von der Empfangsqualität der Funkverbindung der Sprechkanal nach dieser Zeit frei ist.

## Claims

1. A radio communication system with a base radio station and mobile radio stations, which in existing radio links continuously individually realise and maintain synchronism on the basis of received frame synchronization blocks, wherein the base radio station is capable of continuously transmitting radio messages, for example, data blocks containing signalling information, on a transmission channel in a changeable pattern of time frames, wherein, for permanently monitoring the radio link, the mobile radio stations are capable of monitoring the reception of radio messages in this pattern of time frames, wherein the mobile radio stations are capable of resetting a counter when valid radio messages are received and wherein, when invalid radio messages are received, the mobile radio stations are capable of incrementing the count of the counter, this count representing a criterion for the quality of the radio link.

2. A radio communication system as claimed in Claim 1, wherein the mobile radio station continuously transmits radio messages, for example, data blocks containing signalling information, in a changeable pattern of time frames over a traffic channel, wherein, for permanently monitoring the radio link, the base radio station monitors the reception of radio messages in this pattern of time frames, wherein the base radio station resets a counter when valid radio messages are received and, when invalid radio messages are received, increments the count of the counter, this count representing a criterion for the quality of the radio link.

3. A radio communication system as claimed in Claim 1, wherein if the transmission channel is used as a control channel and the count is one higher, equal to the NCCCHW, the mobile radio station will not begin a search for a control channel.

4. A radio communication system as claimed in Claim 3, wherein if the mobile radio station receives a valid radio message and a count equal to NCCHSC is reached, the mobile radio station will be able to begin a search for a control channel and reset the counter.

5. A radio communication system as claimed in Claim 3, wherein when the count NCCHSC is reached, the mobile radio station switches to a spare channel assigned to the control channel and checks whether a control channel message is being received on this spare channel.

6. A radio communication system as claimed in Claim 1, wherein when the transmission channel is used as a traffic channel and if a count is one higher, equal to NTXOF, the mobile radio station will switch off its transmitter and continue to be assigned to this traffic channel.

7. A radio communication system as claimed in Claim 6, wherein if a number of NG valid radio messages are received, the mobile radio station will switch on its transmitter again and reset the counter.

8. A radio communication system as claimed in Claim 6, wherein when a count NTCHR is reached, the mobile radio station will leave the traffic channel.

9. A radio communication system as claimed in Claim 2, wherein if a count NBSP is reached in the base radio station, this station will enhance the transmitter power of its transmitter and feed a command to the mobile radio station to enhance its transmitter power.

10. A radio communication system as claimed in Claims 2 and 3, wherein when a count NCONV of the counter in the base radio station is reached, the latter will transmit a maximum of NTXOF release messages to the mobile radio station, whereas, irrespective of the reception quality of the radio link, the traffic channel is free after this period of time.

11. A radio communication system as claimed in Claims 2 and 3, wherein the base radio station transmits a maximum of NTXOF release messages to the mobile radio stations, whereas, irrespective of the reception quality of the radio link, the traffic channel is free after this period of time.

## Revendications

1. Système de transmission par radio comportant un poste de radio fixe et des postes de radio mobiles qui, dans le cas d'une liaison radio existante, rétablissent et maintiennent constamment et automatiquement la synchronisation sur base de la synchronisation de trame reçue, caractérisé en ce que le poste de radio fixe est à même d'émettre en continu sur un canal de transmission, dans une grille variable de périodes, des messages radio, par exemple des blocs de données contenant de l'information de signalisation, qu'en vue de la surveillance permanente de la liaison radio, les postes de radio mobiles sont à même de surveiller la réception de messages radio dans cette grille, que lors de la réception de messages radio valides, les postes de radio mobiles sont à même de ramener un compteur dans son état initial et que lors de la réception de messages radio invalides, les postes de radio mobiles sont à même d'incrémenter la position de comptage du compteur, qui constitue un critère pour la qualité de la liaison radio.

2. Système de transmission par radio suivant la revendication 1, caractérisé en ce que le poste de radio mobile émet en continu, dans une grille de périodes variable, des messages radio, par exemple des blocs de données contenant de l'information de signalisation, que le poste de radio fixe, en vue de la surveillance permanente de la liaison radio, surveille la réception de messages radio dans cette grille, que lors de la réception de messages radio valides, le poste de radio fixe ramène un compteur dans sa position initiale et que lors de la réception de messages radio invalides, le poste de radio fixe incrémente la position de comptage du compteur, qui constitue un critère pour la qualité de la liaison radio.

3. Système de transmission par radio suivant la revendication 1, caractérisé en ce que lors de l'utilisation du canal de transmission en tant que canal d'organisation et pour une position de comptage supérieure ou égale à NCCHW, le poste de radio mobile n'entame aucune recherche de canal d'organisation.

4. Système de transmission par radio suivant la revendication 3, caractérisé en ce que lors de la réception d'un message radio valide dans le poste de radio mobile et avant qu'une position de comptage NCCHSC soit atteinte, le poste de radio mobile peut entamer une recherche de canal d'organisation et ramène le compteur dans son état initial.

5. Système de transmission par radio suivant la revendication 3, caractérisé en ce que lorsque la position de comptage NCCHSC est atteinte, le poste de radio mobile se commute sur un canal de remplacement associé au canal d'organisation et vérifie si un message de canal d'organisation est reçu sur ce canal de remplacement.

6. Système de transmission par radio suivant la revendication 1, caractérisé en ce que lors de l'utilisation du canal de transmission en tant que canal de conversation et pour une position de comptage supérieure OU égale à NTXOF, le poste de radio mobile coupe son émetteur et reste par la suite associé à ce canal de conversation.

7. Système de transmission par radio suivant la revendication 6, caractérisé en ce que lors de la réception de NG messages radio valides, le poste de radio mobile allume à nouveau son émetteur et ramène le compteur à l'état initial.

8. Système de transmission par radio suivant la revendication 6, caractérisé en ce que lorsqu'une position de comptage NTCHR est atteinte, le poste de radio mobile quitte le canal de conversation.

9. Système de transmission par radio suivant la revendication 2, caractérisé en ce que lorsqu'une position de comptage NBSP du compteur est atteinte dans le poste de radio fixe, ce dernier augmente la puissance d'émission de son émetteur et transmet au poste de radio mobile une instruction d'accroître la puissance d'émission de son émetteur.

10. Système de transmission par radio suivant les revendications 2 et 3, caractérisé en ce que lorsqu'une position de comptage NCONV du compteur est atteinte dans le poste de radio fixe, ce dernier émet tout au plus NTXOF messages de déclenchement au poste de radio mobile, de sorte qu'indépendamment de la qualité de la réception de la liaison radio, le canal de conversation est libre après ce laps de temps.

11. Système de transmission par radio suivant les revendications 2 et 3, caractérisé en ce que le poste de radio fixe transmet tout au plus NTXOF messages de déclenchement au poste de radio mobile, de sorte qu'indépendamment de la qualité de la réception de la liaison radio, le canal de conversation est libre après ce laps de temps.